# EUROPEAN PATENT APPLICATION

(11) **EP 4 790 579 A1**
(43) Date of publication of application: **12.08.2026**
(21) Application number: 25864697.5
(22) Date of filing: 02.01.2025
(51) Int. Cl.: G06F 21/60, G06F 21/62, G06F 21/64

(54) **DATA PROCESSING METHOD, APPARATUS, AND SYSTEM, ELECTRONIC DEVICE, AND STORAGE MEDIUM**

(30) Priority: 12.09.2024 CN 202411277458
(71) Applicant: JIANGSU XCMG STATE KEY LABORATORY TECHNOLOGY CO., LTD., Xuzhou Jiangsu 221004 (CN)
(72) Inventor: FENG, Yuqing, Xuzhou, Jiangsu 221004 (CN); WANG, Bin, Xuzhou, Jiangsu 221004 (CN); WANG, Qian, Xuzhou, Jiangsu 221004 (CN); QIU, Shengqi, Xuzhou, Jiangsu 221004 (CN)
(74) Representative: Hauck Patent- und Rechtsanwälte PartmbB
(86) International application number: PCT/CN2025/070010
(87) International publication number: WO 2026/056188

(57) **Abstract**

The present disclosure relates to the technical field of data processing, and relates to a data processing method, apparatus, and system, an electronic device, and a computer-readable storage medium. The data processing method is performed by a first node, and comprises: collecting data, the data comprising a plurality of data blocks; on the basis of the plurality of data blocks, constructing a Merkle tree; encrypting each data block using the Merkle tree; and transmitting each encrypted data block and the Merkle tree to a second node, the Merkle tree being used by the second node to decrypt each encrypted data block and to perform data integrity verification on each decrypted data block.

## Description

### CROSS-REFERENCE TO RELATED APPLICATIONS

The present disclosure is based on and claims priority of Chinese Patent Application No. 2024112774581, filed on September 12, 2024, the entire disclosure of the prior application is hereby incorporated by reference in its entirety.

### TECHNICAL FIELD

The present disclosure relates to the field of data processing technologies, particularly to a data processing method, an apparatus and a system, an electronic device, and a computer-readable storage medium.

### BACKGROUND

With the rapid development of the modem construction machinery industry, intelligent and unmanned control technologies have been widely applied in the field of construction machinery. These technologies significantly enhance the overall efficiency of engineering projects by reducing labor costs, improving operational efficiency and safety. However, with the popularization of remote control and unmanned operation, data security and system reliability issues have become increasingly prominent. Construction machinery devices are prone to data tampering, data theft, and data attack during remote control and data transmission, which not only threatens the normal operation of the devices but may also cause serious economic losses and security accidents.

In the related arts, construction machinery control systems mainly rely on traditional encryption methods and data verification mechanisms, such as symmetric encryption, asymmetric encryption, and single-layer hash verification.

### SUMMARY

According to a first aspect of the present disclosure, there is provided a data processing method performed by a first node, including: acquiring data including a plurality of data blocks; building a Merkle tree based on the plurality of data blocks; encrypting each data block using the Merkle tree; and transmitting each encrypted data block and the Merkle tree to a second node, where the Merkle tree is configured for the second node to decrypt the each encrypted data block and perform a data integrity verification on the each decrypted data block.

According to a second aspect of the present disclosure, there is provided a data processing method performed by a second node, including: receiving a Merkle tree built based on a plurality of data blocks and each encrypted data block transmitted by a first node, where the plurality of data blocks are obtained based on data acquired by the first node, and the each encrypted data block is obtained by encrypting each data block using the Merkle tree; decrypting the each encrypted data block using the Merkle tree; and performing a data integrity verification on the each decrypted data block.

According to a third aspect of the present disclosure, there is provided a data processing apparatus deployed on a first node, including: an acquisition module configured to acquire data including a plurality of data blocks; a building module configured to build a Merkle tree based on the plurality of data blocks; an encryption module configured to encrypt each data block using the Merkle tree; and a transmission module configured to transmit each encrypted data block and the Merkle tree to a second node, where the Merkle tree is configured for the second node to decrypt the each encrypted data block and perform a data integrity verification on the each decrypted data block.

According to a fourth aspect of the present disclosure, there is provided a data processing apparatus deployed on a second node, including: a receiving module configured to receive a Merkle tree built based on a plurality of data blocks and each encrypted data block transmitted from a first node, where the plurality of data blocks are obtained based on data acquired by the first node, and the each encrypted data block is obtained by encrypting each data block using the Merkle tree; a decryption module configured to decrypt the each encrypted data block using the Merkle tree; and a verification module configured to perform a data integrity verification on the each decrypted data block.

According to a fifth aspect of the present disclosure, there is provided a data processing system including: a first node configured to perform a data processing method performed by a first node according to any one of the embodiments described above; and/or a second node configured to perform a data processing method performed by a second node according to any one of the above embodiments.

According to a sixth aspect of the present disclosure, there is provided an electronic device including: a memory; and a processor coupled to the memory, the processor configured to perform a data processing method according to any one of the above embodiments based on instructions stored in the memory.

According to a seventh aspect of the present disclosure, there is provided a computer-readable storage medium stored thereon computer program instructions that, when executed by a processor, implement a data processing method according to any one of the above embodiments.

### BRIEF DESCRIPTION OF THE DRAWINGS

The accompanying drawings, which are incorporated in and constitute a portion of this specification, illustrate embodiments of the present disclosure and, together with the specification, serve to explain the principles of the present disclosure.

The present disclosure will be more clearly understood from the following detailed description with reference to the accompanying drawings, in which:
Figure 1 is a flowchart illustrating a data processing method according to some embodiments of the present disclosure;
Figure 2 is a flowchart illustrating a data processing method according to other embodiments of the present disclosure;
Figure 3 is a block diagram illustrating a data processing apparatus according to some embodiments of the present disclosure;
Figure 4 is a block diagram illustrating a data processing apparatus according to other embodiments of the present disclosure;
Figure 5 is a block diagram illustrating a data processing system according to some embodiments of the present disclosure;
Figure 6 is a block diagram illustrating an electronic device according to some embodiments of the present disclosure;
Figure 7 is a block diagram illustrating a computer system configured to implement some embodiments of the present disclosure.

### DETAILED DESCRIPTION

Various exemplary embodiments of the present disclosure will now be described in detail with reference to the accompanying drawings. Notice that, unless otherwise specified, the relative arrangement, numerical expressions and values of the components and steps set forth in these embodiments do not limit the scope of the disclosure.

At the same time, it should be understood that, for ease of description, the dimensions of the various parts shown in the drawings are not drawn to actual proportions.

The following description of at least one exemplary embodiment is in fact merely illustrative and is in no way intended as a limitation to the disclosure, its application or use.

Techniques, methods, and apparatus known to those of ordinary skill in the relevant art may not be discussed in detail, but where appropriate, these techniques, methods, and apparatuses should be considered as part of the specification.

Of all the examples shown and discussed herein, any specific value should be construed as merely illustrative and not as a limitation. Thus, other examples of exemplary embodiments may have different values.

Note that similar reference numerals and letters are denoted by the like in the accompanying drawings, and therefore, once an item is defined in a drawing, there is no need for further discussion in the accompanying drawings.

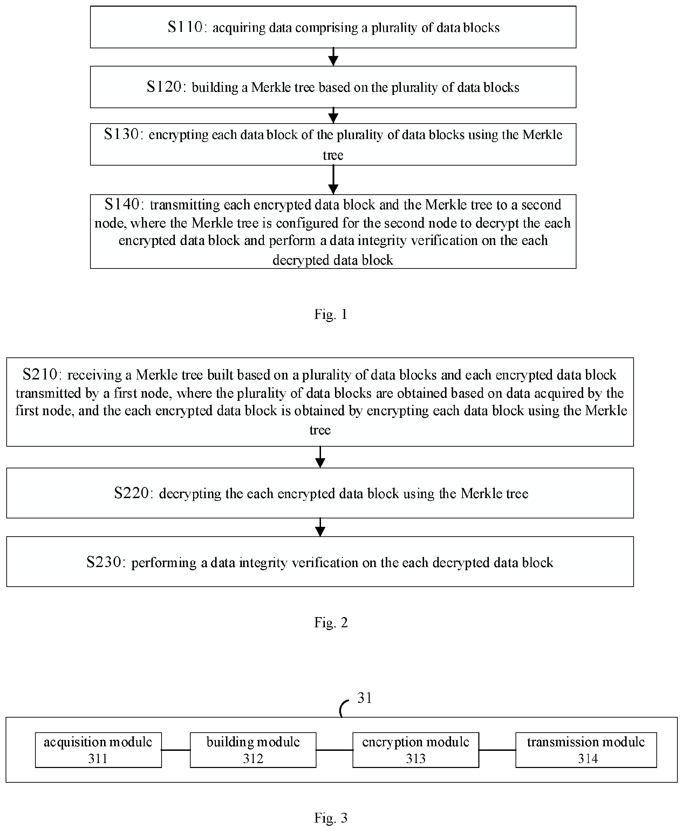

Figure 1 is a flowchart illustrating a data processing method according to some embodiments of the present disclosure.

As shown in Figure 1, a data processing method performed by a first node includes: acquiring data including a plurality of data blocks in step S110; building a Merkle tree based on the plurality of data blocks in step S120; encrypting each data block using the Merkle tree in step S130; and transmitting each encrypted data block and the Merkle tree to a second node in step S140, where the Merkle tree is configured for the second node to decrypt each encrypted data block and perform a data integrity verification on the each decrypted data block.

In some embodiments, the first node acquires data in the form of data blocks and builds a Merkle tree based on the data blocks, such that the second node may use the Merkle tree to perform an encryption and an integrity verification, realizing a multi-level data integrity verification mechanism based on the Merkle tree, which may improve the security, flexibility, and efficiency of data transmission. The first node may be a sender, in a case where the second node is a receiver. The first node may be a receiver, in a case where the second node is a sender.

For example, the first node includes a control node and the second node includes one or more device nodes. As another example, the first node includes one or more device nodes and the second node includes a control node.

For example, a distributed control module achieves synchronous control and management of a plurality of construction machinery devices (device nodes) over a distributed network. The distributed control module includes a control node, a device node, and a data synchronization module. The control node is configured to send a control instruction and coordinate the operations of a plurality of device node. The control node sends the instruction to each device node based on actual operational requirements and receives status feedback from the device. The device node receives the control instruction, performs an operation corresponding to the control instruction, and feeds its device status back to the control node. Each device node has independent computing and communication capabilities, capable of autonomously executing instructions. The data synchronization module ensures data consistency between the plurality of device nodes, preventing instruction loss or repeated execution. For example, the data synchronization module uses a distributed consistency algorithm to achieve data synchronization. The distributed consistency algorithm includes a Raft algorithm or a Paxos algorithm.

Distributed control may improve the flexibility and scalability of a system composed of the control node and the device node.

In step S110, data is acquired, and the data includes a plurality of data blocks.

In some embodiments, the first node and the second node are nodes related to an operation scenario of construction machinery, and the data includes a control instruction and operation data during the operation of the construction machinery, where the control instruction and the operation data belong to different data blocks.

The operation data includes but is not limited to sensor data, an operation log, and status information.

For example, a data acquisition module is configured to acquire various types of data in real-time during the operation of the construction machinery, including but not limited to the sensor data, the control instruction, the operation log, and the status information. These data are used as inputs in subsequent hash operation and verification processes.

Specifically, the data acquisition module is configured to acquire various types of data generated during the operation of the construction machinery, including the sensor data, the operation log, and the control instruction. These data are obtained in real-time via a sensor, a logging system, and a control interface, and stored in a data cache region, waiting for subsequent processing.

For example, the status of a mechanical device such as temperature, pressure, position, and other parameters is monitored in real time using a sensor mounted on the mechanical device, and these data are transmitted to the data acquisition module via a data bus.

As another example, an operation log file is generated by recording every operation instruction of the operator and the response of the device.

As another example, the control instruction sent by a remote control center is acquired as the basis for a data verification and execution.

In step S120, a Merkle tree is built based on the plurality of data blocks.

For example, a data hash generation module may be configured to perform a hash operation on the acquired raw data, i.e., to perform the hash operation on each data block and generate a fixed-length hash value for the each data block. Regarding the hash function, SHA-256 (Secure Hash Algorithm-256) or other highly secure hash algorithms may be employed to ensure both the uniqueness and security of the hash values. The each data block corresponds to a unique hash value, which is configured to build the Merkle tree subsequently.

Taking the SHA-256 hash algorithm as an example, the hash function formula is H(x)=SHA-256(x), where H(x) represents the hash value of data (x), and SHA-256 is the hash algorithm employed.

The hash generation process includes: inputting each acquired data block D(i) into the hash function, computing a hash value H(D(i)) for the each data block, and storing the hash values of all data blocks in a hash list for building a Merkle tree.

For example, a Merkle tree building module may be configured to recursively merge the hash values of the plurality of data blocks according to a certain rule to generate a Merkle root. The designated process is as follows.

First, the hash values of the plurality of data blocks are paired to perform a hash operation to obtain a plurality of new hash values. The hash values of each pair of two data blocks may be configured to generate a new hash value as the hash value of a next level node in the Merkle tree. The hash value of the data block serves as a leaf node of the Merkle tree.

Then, the new hash values are paired again and the hash operation is repeated until only one new hash value remains, which serves as the top-level hash value of the Merkle tree, i.e., the Merkle root hash value.

For example, the Merkle tree structure may be represented as:
${H}_{12} = H \left(H\left({D}_{1}\right)\left‖H\left({D}_{2}\right)\right.\right)$
${H}_{34} = H \left(H\left({D}_{3}\right)\left‖H\left({D}_{4}\right)\right.\right)$
${H}_{root} = H \left({H}_{12}\left‖{H}_{34}\right.\right) ,$
where, H(x||y) represents concatenating two hash values x and y before the hash operation, and Hᵣₒₒₜ is the Merkle root hash value.

In some embodiments, the Merkle tree is also configured for the second node to perform an identity verification on the first node based on a zero-knowledge proof algorithm.

For example, a Merkle tree hash verification module, leveraging an efficient hash verification based on the Merkle tree, ensures both data security and authentication accuracy during the authentication process. The specific process includes hash computation and hash verification. During the hash computation process, the data for the zero-knowledge proof is performed the hash operation to generate a hash value. During the hash verification process, the generated hash value is compared with a corresponding node in the Merkle tree to verify the integrity and validity of the data.

For another example, an identity verification module may employ zero-knowledge proof technology to verify the operational permission and identity legitimacy of an operator. Specifically, the operator may generate an authentication proof via a zero-knowledge proof protocol without exposing sensitive information. The process of generating the authentication proof may be represented as ZKP = Prove(x, w), where ZKP represents a zero-knowledge proof, x is public information, w is private information, and Prove is a zero-knowledge proof generation algorithm.

A remote device may verify the validity of the proof and confirm the identity of the operator through a hash verification mechanism based on the Merkle tree. The verification process may be represented as Verify = (ZKP, x) → {true, false}, where Verify is a zero-knowledge proof verification algorithm that returns an verification result.

For example, the Merkle tree hash verification module, leveraging the efficient hash verification based on the Merkle tree, may further ensure the data security and the authentication accuracy during the authentication process. For example, a hash operation is performed on the authentication proof, represented as H(ZKP) = SHA - 256(ZKP), to obtain a hash value of the data for zero-knowledge proof. Furthermore, hash verification is performed on the authentication proof, represented as $V \left(ZKP\right) = \left\{\begin{matrix}ture , if H \left(ZKP\right) ∈ Merkle tree \\ false , others\end{matrix}\right.$ , to verify the consistency between the hash value and a corresponding node in the Merkle tree and confirm the validity of the authentication proof.

For example, an interactive zero-knowledge proof method may be configured for the identity verification.

First, a witness is constructed: the witness is composed of non-sensitive information, including a plurality of questions and corresponding answers (such as gross vehicle weight, vehicle color, load capacity, etc.);

then, a reply is issued: a prover (sender) randomly selects a question, packages the question and an answer, encrypts the question and the answer using the root hash value, and sends an encrypted question and an encrypted answer to a verifier (receiver);

next, a random challenge is presented: the verifier performs a decryption, verifies the answer, randomly selects another question and sends the question to the prover, which is also encrypted using the root hash value;

then, a reply is issued: the prover receives and decrypts the question, computes the answer and sends the answer to the verifier. The reply from the prover allows the verifier to verify whether the witness can really be contacted by the prover.

The above process may be repeated until the verifier trusts the prover.

For example, an identity verification should be performed for the first communication after machine power restoration, or in a case where the online duration exceeds a designated communication time threshold (such as 3 hours).

In the field of construction machinery, compliance verification typically requires submission of extensive operational and maintenance records. A zero-knowledge proof may simplify this process by providing a verification proof without revealing specific operational details, thereby reducing compliance costs. A zero-knowledge proof supports a decentralized verification process, enabling operational verification without the need for a central server. This improves the operational efficiency of construction machinery and reduces reliance on a centralized system.

In some embodiments, the first node may also perform an identity verification on the second node based on a zero-knowledge proof algorithm using the Merkle tree received from the second node. The verification process is the same as described above and will not be repeated here.

Zero-knowledge proof technology has a wide range of potential applications in cryptography and information security. This technology may verify data accuracy and identity legitimacy without revealing sensitive information, thereby significantly enhancing system security and privacy protection capabilities. However, the application of zero-knowledge proof technology in the field of construction machinery is still in the infancy stage, and the zero-knowledge proof mechanism combined with the Merkle tree structure has not been extensively researched or applied.

In step S130, each data block is encrypted using the Merkle tree.

In some embodiments, the Merkle tree includes a Merkle root hash value. In this case, encrypting the each data block using the Merkle tree includes the following steps.

Each data block is encrypted using the Merkle root hash value as an encryption key, where the Merkle root hash value is also used as a decryption key for decrypting the each encrypted data block.

In some embodiments, the Merkle root hash value is calculated from multi-layer hash values in the Merkle tree. Using the Merkle root hash value as the encryption key may further improve the security of data transmission.

For example, an encryption communication module encrypts the data using the Merkle tree structure to ensure the security of data transmission. In the process of data encryption, a hash value generated from the Merkle tree is used as a key to encrypt the data. During the process of data transmission, remote transmission is performed via an encrypted data packet to prevent data theft or tampering during transmission. During the process of data decryption, the device node or control node performs the decryption by using the same hash key after receiving the encrypted data to recover the raw data.

In some embodiments, the data encryption process may be represented as $E \left(D\right) = {AES}_{{H}_{root}} \left(D\right)$, where E(D) is an encryption result of data D, AES is a symmetric encryption algorithm, and Hᵣₒₒₜ is the Merkle root that serves as the encryption key. Correspondingly, the data decryption process may be represented as $D = {AES}_{{H}_{root}}^{- 1} \left(E\left(D\right)\right)$, where AES⁻¹ is the AES decryption function and D is the decrypted raw data.

In step 140, each encrypted data block and the Merkle tree are transmitted to the second node, where the Merkle tree is configured for the second node to decrypt the each encrypted data block and perform a data integrity verification on the each decrypted data block.

In some embodiments, the data integrity verification is performed by a data verification module of the second node.

In some embodiments, the first node may also receive one or more encrypted data blocks and the Merkle tree from the second node, decrypt each encrypted data block received from the second node using the Merkle tree received from the second node, and perform a data integrity verification on each data block decrypted by the first node. Data integrity verification by the first node is performed, for example, by a data verification module of the first node.

For example, the data verification module performs data integrity verification by comparing the Merkle root with a hash value obtained based on a data block and a root path corresponding to the data block. The specific process is as follows.

A hash value of the data block is computed, and a root hash value is re-computed based on the root path of the data block for comparison with the root hash value of the Merkle tree. In response to the computed root hash value being consistent with the root hash value of the Merkle tree, data integrity is verified; otherwise, the data may have been tampered with. In this way, tampered data may be quickly located to enable repair or alarm processing in a timely manner.

For example, the data verification module compares a root hash value obtained based on a hash value of a data block and a root path of the data block in the Merkle tree (also known as a hash value path) to determine whether the hash value of the data block belongs to the Merkle tree, so as to verify the integrity of the data. The data verification formula is:
$V \left({D}_{i}\right) = \left\{\begin{matrix}ture , if H \left({D}_{i}\right) ∈ Merkle tree \\ false , others\end{matrix}\right.$

V(Dᵢ) represents a verification result of data block Dᵢ.

Specifically, a hash value H(Dᵢ) of data block Dᵢ may be computed first, and then a corresponding hash value path may be searched in the Merkle tree. In response to the path existing and being consistent with the Merkle root, data integrity is verified; otherwise, the data may have been tampered with. In the case of tampered data, an error log may be recorded and an alarm may be triggered to prevent any further operations from being performed on the data.

In some embodiments, each encrypted data block and the Merkle tree may be transmitted to the second node as follows.

Each encrypted data block and the Merkle tree are transmitted to the second node via a secure communication channel. For example, the secure communication channel may be TLS (Transport Layer Security). Transmitting an encrypted data block via the secure communication channel may prevent data from being stolen or tampered with during transmission.

In some embodiments, each encrypted data block includes an encrypted control instruction, and transmitting the each encrypted data block and the Merkle tree to the second node includes the following step.

At least one of a bandwidth resource allocation of the encrypted control instruction or a priority for transmitting the encrypted control instruction is dynamically adjusted based on a channel state of the secure communication channel. For example, in the case where the channel state of the secure communication channel is poor and an original priority for transmitting the encrypted control instruction is high, the priority for transmitting the encrypted control instruction may be reduced to adjust the execution order of the control instruction to ensure that the control instruction is transmitted in a better channel state, improving the stability and integrity of data transmission, and ensuring the real-time performance and reliability of critical operations.

In other embodiments, each encrypted data block and the Merkle tree may be transmitted to the second node as follows.

First, a network condition is monitored in real time. For example, the network condition is determined based on at least one parameter such as network latency, loans, or packet loss rate.

Then, a transmission rate and a packet size for transmitting the each encrypted data block and the Merkle tree are dynamically adjusted based on the network conditions. This method may optimize transmission performance.

In other embodiments, each encrypted data block and the Merkle tree may also be transmitted to the second node in the following manner.

Firstly, transmission progress is periodically recorded during the transmission of the each encrypted data block and the Merkle tree.

Secondly, in response to a connection between the first and the second node being interrupted, the transmission progress is saved at the time of an interruption. For example, the transmission progress may be saved locally or in a cloud storage system.

Then, whether the connection is restored is monitored.

Finally, in response to the connection being restored, the transmission of the each encrypted data block and the Merkle tree to the second node is resumed based on the transmission progress at the time of the interruption until data transmission is complete.

In some embodiments, a dynamic adjustment module may support breakpoint resume transmission and dynamic adjustment, improving the adaptability of the data processing system in complex environments. The breakpoint resume transmission strategy enables the system to automatically save the transmission progress in response to data transmission being interrupted and resume transmission after the connection is restored, thereby ensuring data integrity. Dynamic adjustment refers to dynamically adjusting the data transmission strategy based on network condition and device status to ensure the stable operation of the system.

The above is a data processing method performed by the first node. A data processing method perform by the second node according to some embodiments of the present disclosure will be described below.

Figure 2 is a flowchart illustrating a data processing method according to other embodiments of the present disclosure.

As shown in Figure 2, the data processing method performed by the second node includes: in step S210, receiving a Merkle tree built based on a plurality of data blocks and each encrypted data block transmitted by the first node, where the plurality of data blocks are obtained based on data acquired by the first node, and the each encrypted data block is obtained by encrypting each data block using the Merkle tree; in step S220, decrypting the each encrypted data block using the Merkle tree; in step S230, performing a data integrity verification on the each decrypted data block.

In some embodiments, the first node acquires data in the form of data blocks and builds a Merkle tree based on the data blocks, such that the second node may use the Merkle tree to perform an encryption and an integrity verification, realizing a multi-level data integrity verification mechanism based on the Merkle tree, which may improve the security, flexibility, and efficiency of data transmission. The first node may be a sender, in a case where the second node is a receiver. The first node may be a receiver, in a case where the second node is a sender.

For example, the first node includes a control node and the second node includes one or more device nodes. As another example, the first node includes one or more device nodes and the second node includes a control node.

In some embodiments, the first node and the second node are nodes related to an operation scenarios of construction machinery, and the data includes a control instruction and operation data during the operation of the construction machinery, where the control instruction and the operation data belong to different data blocks.

In some embodiments, the Merkle tree includes a Merkle root hash value. Decrypting each encrypted data block using the Merkle tree includes: decrypting the each encrypted data block using the Merkle root hash value as a decryption key, where the each encrypted data block is obtained by encrypting the each data block using the Merkle root hash value as the encryption key.

In some embodiments, the second node may perform an identity verification on the first node based on a zero-knowledge proof algorithm using the Merkle tree.

In some embodiments, receiving the Merkle tree built based on the plurality of data blocks and the each encrypted data block transmitted by the first node includes: receiving the Merkle tree built based on the plurality of data blocks and the each encrypted data block transmitted by the first node via a secure communication channel.

In this disclosure, both the first node and the second node may perform the same operation. Therefore, for some specific descriptions of the data processing method performed by the second node and the data processing method performed by the first node, reference may be made to the various embodiments based on Figure 1, which will not be repeated in this embodiment.

The above is a description of a data processing method performed by the second node. The data processing method according to some embodiments of the present disclosure will be described below.

In the above embodiments, both the first node and the second node involve a multi-level data integrity verification mechanism based on the Merkle tree, a distributed remote control and encryption communication protocol, and a remote authentication system based on zero-knowledge proof during the execution of a data processing method.

Regarding the multi-level data integrity verification mechanism based on the Merkle tree, for example, in an application scenario of an unmanned excavator, a data acquisition module acquires sensor data and an operation log of the excavator in real time. A fixed-length hash value is generated based on these data by a data hash generation module. Then, a Merkle tree building module recursively merges the hash values to generate a Merkle root. In response to the excavator receiving a remote control instruction, a data verification module may first compute a root hash value corresponding to the remote control instruction and is obtained based on the remote control instruction and a hash path, and compare the root hash value with a stored root hash value of the Merkle tree. In response to the hash values being consistent, data integrity is verified, and the excavator performs an operation corresponding to the remote control instruction. In response to the hash values being inconsistent, the data may be tampered with. The system raises an alarm and rejects the operation corresponding to the remote control instruction.

Regarding the distributed remote control and encryption communication protocol, for example, in a construction machinery fleet management system, a control node is configured to send a control instruction and coordinate the operations of a plurality of devices. After receiving the control instruction, each device node performs encryption via an encryption communication module. The hash value generated by the Merkle tree is used as a key to ensure the security of data transmission. A dynamic adjustment module may automatically save the transmission progress in response to a network connection of a device node being interrupted, and resume data transmission in response to the connection being restored, thereby ensuring data integrity. Moreover, the system may dynamically adjust a data transmission strategy and a control instruction based on a network condition to ensure stable operation of the system.

Regarding the remote authentication system based on zero-knowledge proof, the operator generates an authentication proof through a zero-knowledge proof protocol in a remotely operated construction machinery platform and sends the authentication proof to a remote device. The remote device verifies the validity of the proof and confirms the identity of the operator via a hash verification mechanism based on the Merkle tree structure. In a specific implementation, the data for zero-knowledge proof generated by an identity verification module is performed a hash operation based on the Merkle tree to generate a hash value, which is then compared with a corresponding node in the Merkle tree. In response to the verification being passed, the remote device confirms the identity of the operator, enabling subsequent operations.

The remote encryption system for unmanned construction machinery based on the Merkle tree in the present disclosure significantly improves the security of data transmission and system reliability through a multi-level data verification, a distributed control and encryption communication protocol, and a remote authentication system based on zero-knowledge proof, and is suitable for the development requirements of intelligent and unmanned control of construction machinery. This system may effectively solve the problems of data security and system reliability in the existing arts, providing solid technical support for the future development of the construction machinery industry.

A data processing apparatus according to some embodiments of the present disclosure will be described below.

Figure 3 is a block diagram illustrating a data processing apparatus according to some embodiments of the present disclosure.

As shown in Figure 3, a data processing apparatus 31 deployed on a first node includes an acquisition module 311, a building module 312, an encryption module 313, and a transmission module 314.

The acquisition module 311 is configured to acquire data including a plurality of data blocks, for example, to perform step S110 as shown in Figure 1.

The building module 312 is configured to build a Merkle tree based on the plurality of data blocks, for example, to perform step S120 as shown in Figure 1.

The encryption module 313 is configured to encrypt each data block using the Merkle tree, for example, to perform step S130 as shown in Figure 1.

The transmission module 314 is configured to transmit each encrypted data block and the Merkle tree to a second node, where the Merkle tree is configured for the second node to decrypt the each encrypted data block and perform a data integrity verification on the each decrypted data block, for example, to perform step S140 as shown in Figure 1.

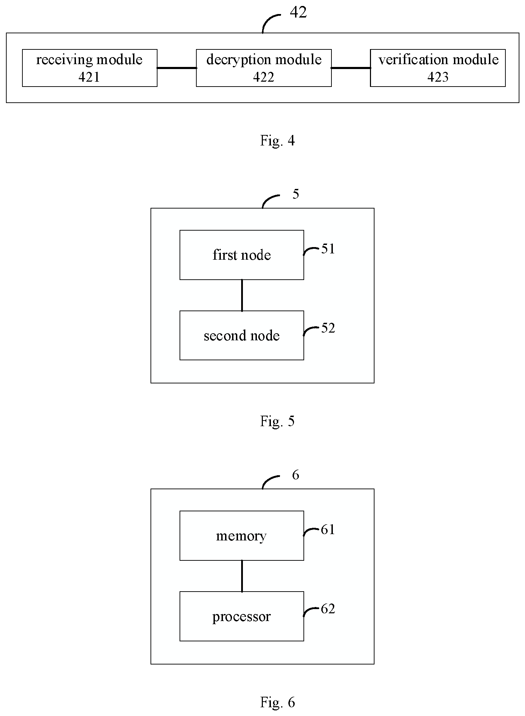

Figure 4 is a block diagram illustrating a data processing apparatus according to other embodiments of the present disclosure.

As shown in Figure 4, a data processing apparatus 42 deployed on a second node includes a receiving module 421, a decryption module 422, and a verification module 423.

The receiving module 421 is configured to receive a Merkle tree built based on a plurality of data blocks and each encrypted data block transmitted from a first node, where the plurality of data blocks are obtained based on data acquired by the first node, and the each encrypted data block is obtained by encrypting each data block using the Merkle tree, for example, to perform step S210 as shown in Figure 2.

The decryption module 422 is configured to decrypt the each encrypted data block using the Merkle tree, for example, to perform step S220 as shown in Figure 2.

The verification module 423 is configured to perform a data integrity verification on the each decrypted data block, for example, to perform step S230 as shown in Figure 2.

A data processing systems according to some embodiments of the present disclosure will be described below.

Figure 5 is a block diagram illustrating a data processing system according to some embodiments of the present disclosure.

As shown in Figure 5, a data processing system 5 includes a first node 51 and a second node 52.

The first node 51 performs, for example, a data processing method performed by a first node according to any one of the embodiments of the present disclosure. The second node 52 performs, for example, a data processing method performed by a second node according to any one of the embodiments of the present disclosure.

Figure 6 is a block diagram illustrating an electronic device according to some embodiments of the present disclosure.

As shown in Figure 6, an electronic device 6 includes a memory 61; and a processor 62 coupled to the memory 61. The memory 61 is configured to store instructions for performing a data processing method of corresponding embodiments. The processor 62 is configured to perform a data processing method according to any one of the embodiments of the present disclosure based on the instructions stored in the memory 61.

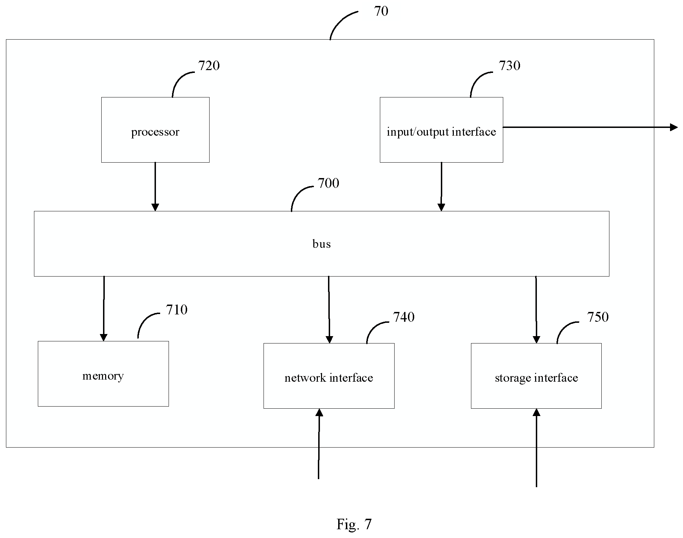

Figure 7 is a block diagram illustrating a computer system configured to implement some embodiments of the present disclosure.

As shown in Figure 7, the computer system 70 may be represented in the form of a general-purpose computing device. The computer system 70 includes a memory 710, a processor 720, and a bus 700 connecting different system components.

The memory 710 may include, for example, a system memory, a non-transitory storage medium, and the like. The system memory stores, for example, an operating system, application programs, a boot loader, and other programs. The system memory may include a transitory storage medium such as random access memory (RAM) and/or cache memory. The non- transitory storage medium stores, for example, instructions for performing the data processing method of at least one corresponding embodiment of the present disclosure. The non-transitory storage medium includes, but not limited to, magnetic disk memory, optical memory, flash memory, and the like.

The processor 720 may be implemented by discrete hardware components such as a general-purpose processor, a digital signal processor (DSP), an application specific integrated circuit (ASIC), a field programmable gate array (FPGA), or other programmable logic devices, discrete gates, or transistors. Accordingly, each module such as the judgment module and the determination module may be implemented by a central processing unit (CPU) running instructions that execute the corresponding steps, or may be implemented by a dedicated circuit that executes the corresponding steps.

The bus 700 may has any of a variety of bus structures. For example, bus structures include, but are not limited to, an Industry Standard Architecture (ISA) bus, a Micro Channel Architecture (MCA) bus, and peripheral component interconnects (PCI) bus.

The computer system 70 may further include an input/output interface 730, a network interface 740, a storage interface 750, and the like. These interfaces 730, 740, 750, the memory 710 and the processor 720 may be connected through the bus 700. The input/output interface 730 may provide a connection interface for input/output devices such as a display, a mouse, and a keyboard. The network interface 740 provides a connection interface for various networked devices. The storage interface 750 provides a connection interface for external storage devices such as a floppy disk, a flash disk, or an SD card.

According to some embodiments of the present disclosure, there is further provided a computer program, including: instructions that, when executed by a processor, cause the processor to perform the data processing method as described above.

Herein, various aspects of the present disclosure are described with reference to flowcharts and/or block diagrams of methods, devices and computer program products according to embodiments of the present disclosure. It should be understood that each block of the flowcharts and/or block diagrams and any combination of the blocks may be implemented by computer-readable program instructions.

These computer program instructions may be provided to a processor of a general purpose computer, a special purpose computer, or other programmable apparatus to generate a machine such that the instructions executed by the processor generate apparatus implementing the functions designated in one or more flows of the flowcharts and/or one or more blocks of the block diagrams.

These computer-readable program instructions may also be stored in a computer-readable storage, and cause a computer to operate in a specific manner to produce a manufactured article including instructions to implement the functions designated in one or more flows of the flowcharts and/or one or more blocks of the block diagrams.

The present disclosure may take the form of an entirely hardware embodiment, an entirely software embodiment or an embodiment including both hardware and software elements.

Some embodiments of the present application further provide a computer program product including a computer program that, when executed by a processor, implement a data processing method according to any one of the above embodiments.

The data processing method, apparatus and system, the electronic device and the computer-readable medium provided in the above embodiments may improve the security, flexibility, and efficiency of data transmission.

Heretofore, the data processing method, apparatus and system, the electronic device and the computer-readable storage medium according to the present disclosure have been described in detail. In order to avoid obscuring the concepts of the present disclosure, some details known in the art are not described. Based on the above description, those skilled in the art can understand how to implement the technical solutions disclosed herein.

## Claims

1. A data processing method performed by a first node, comprising:
acquiring data comprising a plurality of data blocks;
building a Merkle tree based on the plurality of data blocks;
encrypting each data block of the plurality of data blocks using the Merkle tree; and
transmitting each encrypted data block and the Merkle tree to a second node, wherein the Merkle tree is configured for the second node to decrypt the each encrypted data block and perform a data integrity verification on the each decrypted data block.

2. The data processing method according to claim 1, wherein the Merkle tree comprises a Merkle root hash value and the encrypting the each data block using the Merkle tree comprises:
encrypting the each data block using the Merkle root hash value as an encryption key, wherein the Merkle root hash value is also used as a decryption key for decrypting the each encrypted data block.

3. The data processing method according to claim 1 or 2, wherein the Merkle tree is also configured for the second node to perform an identity verification on the first node based on a zero-knowledge proof algorithm.

4. The data processing method according to any one of claims 1 to 3, wherein the transmitting the each encrypted data block and the Merkle tree to the second node comprises:
transmitting the each encrypted data block and the Merkle tree to the second node via a secure communication channel.

5. The data processing method according to claim 4, wherein the each encrypted data block comprises an encrypted control instruction, and the transmitting the each encrypted data block and the Merkle tree to the second node comprises:
dynamically adjusting at least one of a bandwidth resource allocation of the encrypted control instruction or a priority for transmitting the encrypted control instruction based on a channel state of the secure communication channel.

6. The data processing method according to any one of claims 1 to 5, wherein the transmitting the each encrypted data block and the Merkle tree to the second node comprises:
monitoring a network condition in real time; and
dynamically adjusting a transmission rate and a packet size for transmitting the each encrypted data block and the Merkle tree based on the network condition.

7. The data processing method according to any one of claims 1 to 6, wherein the transmitting the each encrypted data block and the Merkle tree to the second node comprises:
recording transmission progress periodically during the transmission of the each encrypted data block and the Merkle tree;
saving the transmission progress at the time of an interruption in response to a connection between the first node and the second node being interrupted;
monitoring whether the connection is restored; and
resuming the transmission of the each encrypted data block and the Merkle tree to the second node based on the transmission progress at the time of the interruption in response to the connection being restored.

8. The data processing method according to any one of claims 1 to 7, wherein:
the first node and the second node are nodes related to an operation scenario of construction machinery, and the data comprises a control instruction and operation data during the operation of the construction machinery, wherein the control instruction and the operation data belong to different data blocks; and/or
the first node comprises a control node and the second node comprises one or more device nodes; or the first node comprises one or more device nodes and the second node comprises a control node.

9. A data processing method performed by a second node, comprising:
receiving a Merkle tree built based on a plurality of data blocks and each encrypted data block transmitted by a first node, wherein the plurality of data blocks are obtained based on data acquired by the first node, and the each encrypted data block is obtained by encrypting each data block using the Merkle tree;
decrypting the each encrypted data block using the Merkle tree; and
performing a data integrity verification on the each decrypted data block.

10. The data processing method according to claim 9, wherein the Merkle tree comprises a Merkle root hash value and the decrypting the each encrypted data block using the Merkle tree comprises:
decrypting the each encrypted data block using the Merkle root hash value as a decryption key, wherein the each encrypted data block is obtained by encrypting the each data block using the Merkle root hash value as the encryption key.

11. The data processing method according to claim 9 or 10, further comprising:
performing an identity verification on the first node based on a zero-knowledge proof algorithm using the Merkle tree.

12. The data processing method according to any one of claims 9 to 11, wherein the receiving the Merkle tree built based on the plurality of data blocks and the each encrypted data block transmitted by the first node comprises:
receiving the Merkle tree built based on the plurality of data blocks and the each encrypted data block transmitted by the first node via a secure communication channel.

13. The data processing method according to any one of claims 9 to 12, wherein:
the first node and the second node are nodes related to an operation scenario of construction machinery, and the data comprises a control instruction and operation data during the operation of the construction machinery, wherein the control instruction and the operation data belong to different data blocks; and/or
the first node comprises a control node and the second node comprises one or more device nodes; or the first node comprises one or more device nodes and the second node comprises a control node.

14. A data processing apparatus deployed on a first node, comprising:
an acquisition module configured to acquire data comprising a plurality of data blocks;
a building module configured to build a Merkle tree based on the plurality of data blocks;
an encryption module configured to encrypt each data block using the Merkle tree; and
a transmission module configured to transmit each encrypted data block and the Merkle tree to a second node, wherein the Merkle tree is configured for the second node to decrypt the each encrypted data block and perform a data integrity verification on the each decrypted data block.

15. A data processing apparatus deployed on a second node, comprising:
a receiving module configured to receive a Merkle tree built based on a plurality of data blocks and each encrypted data block transmitted from a first node, wherein the plurality of data blocks are obtained based on data acquired by the first node, and the each encrypted data block is obtained by encrypting each data block using the Merkle tree;
a decryption module configured to decrypt the each encrypted data block using the Merkle tree; and
a verification module configured to perform a data integrity verification on the each decrypted data block.

16. A data processing system, comprising:
a first node configured to perform a data processing method according to any one of claims 1 to 8; and/or
a second node configured to perform a data processing method according to any one of claims 9 to 13.

17. An electronic device, comprising:
a memory; and
a processor coupled to the memory, the processor configured to, based on instructions stored in the memory, carry out a data processing method according to any one of claims 1 to 13.

18. A computer-readable storage medium stored thereon computer program instructions that, when executed by a processor, implement a data processing method according to any one of claims 1 to 13.

19. A computer program, comprising:
instructions that, when executed by a processor, cause the processor to perform a data processing method according to any one of claims 1 to 13.
